# EUROPEAN PATENT SPECIFICATION

(11) **EP 0 707 720 B1**
(45) Date of publication and mention of the grant of the patent: **27.10.1999**
(21) Application number: 95917355.0
(22) Date of filing: 21.04.1995
(51) Int. Cl.: G05D 23/13

(54) **A THERMOSTATIC MIXING DEVICE**
THERMOSTATISCHE MISCHVORRICHTUNG
DISPOSITIF MELANGEUR THERMOSTATIQUE

(30) Priority: 05.05.1994 IT TO940360
(43) Date of publication of application: 24.04.1996
(73) Proprietor: GEVIPI A.G., FL-9490 Vaduz (LI)
(72) Inventor: KNAPP, Alfons, D-7950 Biberach/Riss (DE)
(74) Representative: Patrito, Pier Franco, Dr. Ing.
(86) International application number: EP9501526
(87) International publication number: WO9530939

(56) References cited:
- WO-A-90/03604
- DE-B- 1 097 777
- GB-A- 2 120 752
- US-A- 4 457 452
- US-A- 4 738 393

## Description

The subject of the present invention is a thermostatic mixing device of the type comprising two inlet ducts for hot water and cold water, a mixing chamber, passages between said inlet ducts and said mixing chamber, a delivery duct for mixed water, a thermometric element acting by thermal expansion arranged for being lapped by the mixed water, and a distribution slide valve operated by said thermometric element acting by thermal expansion and arranged for throttling in opposite manner said passages between the two inlet ducts and the mixing chamber, in order to maintain substantially constant the temperature of the mixed water.

In order to ensure that the temperature of the water mixed by a mixing device or mixing faucet is kept near a prefixed value, even when disturbing elements may be present, such as particularly changes in the pressure of the inlet pipings, substantially two types of devices may be used. The first type of device which may be used to this aim consists of a slide valve which is subjected to the pressures of the two inlet ducts, acting in opposite directions, and is arranged for throttling in opposite manner the inlet passages in order to compensate for the pressure changes when these latter are different in the two inlet pipings. In this manner, the most disturbing element which hinders maintaining a constant temperature of the mixed water is neutralized, though no correcting action is effected on the other disturbing elements. This type of compensated mixing device may be embodied in compact form and its manufacture is relatively simple and cheap. However this type of device has only a partial correcting action, and moreover the operation of such a compensation slide valve is very delicate and it is easily hindered by calcareous deposits. Therefore, in many instances it is preferred to use a thermometric element acting by thermal expansion, arranged in order to operate a slide valve which throttles in opposite manner the inlet passages for hot and cold water, before the water is directed to the mixing operation. Such a thermostatic device has a safe operation and a long life, but its manufacture, in the known embodiments, is considerably complex and expensive.

Many improvements have been brought to the initial embodiments of these thermostatic mixing devices and, in particular, a substantially coaxial construction has been adopted (Italian Patent Applications Nos. 67629-A/72, 67630-A/72 and BS 92 A 000025, and U.S. Patent No. 4,509,677), and the mechanisms have been realized in the shape of replaceable cartridges (U.S. Patent No. 4,738,393 and Italian Patent Application No. BS 92 A 00025). Moreover, these latter documents foresee that a closure of the inlet ducts is associated to the thermostatic device, upstream the mixing region, whereby the device takes the character of a thermostatic mixing faucet, and the separation between the pipings for hot and cold water is ensured when the mixing faucet is closed, without the need for non-return valves.

However, the thermostatic devices using a thermometric element acting by thermal expansion show, in the known embodiments, a specific disadvantage. As known, the delivery rate of such a device depends largely on the useful diameter and the stroke length of the slide valve operated by the thermometric element. The stroke length cannot be arbitrarily increased because from it also depends, inversely to the delivery rate, the sensitivity of the device. Therefore, in order to increase the admitted delivery rate, it is only possible to increase the useful diameter of the slide valve, but this causes an increase in the general diameter of encumbrance of the device, and this can be allowed only within certain limits. In the known embodiments, the diameter of encumbrance of the device is noticeably larger than the useful diameter of the slide valve, due to the presence of the inlet ducts, which are always been situated outside the slide valve.

Another specific disadvantage of these thermostatic devices resides in the complicated shape of said inlet ducts which supply the passages throttled by the slide valve; this complicated shape causes difficulties and high costs in the manufacture. A further disadvantage of this kind of devices is that, in order to attain a good performance, it is needed to foresee special shaping suitable for ensuring that hot and cold water are effectively mixed before the mixed water arrives to contact the thermometric element acting by thermal expansion. Finally, a disadvantage of the known thermostatic devices is that their delivery rate and sensitivity are established in a substantially non-changeable way by the features of manufacture, and cannot be easily modified in view of the needs of particular applications.

The main object of this invention is to improve the known thermostatic devices by removing or reducing one or more of the disadvantages shown by the known devices. Therefore, an object of the invention is to allow increasing the useful diameter of the slide valve without involving a corresponding increase in the dimensions of encumbrance of the device. Another object is to render substantially more simple the manufacture of the device, and particularly of the ducts which lead the hot and cold water to the slide valve operated by the thermometric element. Still another object of the invention is to ensure by extremely simple means the effective mixing of hot and cold water, before the mixed water arrives to contact the thermometric element. A further object of the invention is to allow (when required) the adjustment of the maximum allowed delivery rate and the sensitivity of each individual device. Finally, it is an object of the invention to allow, by simple and effective means, the use of a thermostatic device as a thermostatic mixing faucet, without need for installing non-return valves.

According to the invention, a thermostatic device of the considered kind is mainly characterized in that both the inlet ducts for hot and cold water, and the delivery duct for the mixed water, are embodied in a central body situated inside the slide valve operated by the thermometric element.

This arrangement of the ducts involves different advantageous consequences. Before all, the space needed around the slide valve, inside the envelope of the device, is free from inlet ducts and thus it may be reduced to the minimum possible extension, whereby the slide valve may be given the larger possible useful diameter compatible with the allowed encumbrance dimensions of the device. As a consequence, being equal all other conditions, the delivery rate and the sensitivity of the device are higher. Moreover, the whole of the inlet and delivery ducts may be embodied in shapes which are less complicated than the usual ones, thus allowing an easy and cheap manufacture of the central body of the device, wherein the ducts are realized.

According to a preferred embodiment of the invention, the delivery duct is located in center and it contains the thermometric element, and the two inlet ducts are located at the sides of the delivery duct and each of them opens in an own annular chamber, both these annular chambers being realized at the periphery of the central body, being displaced the one with respect to the other along the axis of the device, being separated by a sealing packing and being limited by shoulders with which co-operates the slide valve in order to effect the regulation.

This arrangement ensures the maximum simplicity of the embodiment of the central body wherein the ducts are formed and, if desired, this body may also be economically manufactured by casting, pressure casting or injection.

According to another preferred feature of the invention, said shoulder of one of the two annular chambers is formed on a ring nut screwed on the distal end of said central body. This way, the position of the shoulder may be regulated within certain limits by more or less screwing said ring nut, and in this manner an individual regulation of the delivery rate and the sensitivity of the device is attained.

Another preferred feature of the invention provides that the thermometric element acting by thermal expansion is fixed to a cup comprising a disk and a skirt extending outside the slide valve and connected thereto in order to operate the same. In an advantageous embodiment, water passages are formed in said cup in order to allow mixing a water flow coming from outside and a water flow coming from inside. This way, the mixing operation takes place between almost perpendicular flows, therefore showing the maximum effectiveness, before the mixed water comes to contact the thermometric element.

In those cases in which the device according to the invention is not required to have the operation of a faucet, it is arranged for being applied in a fixed position onto a supply and delivery manifold. In this case, thanks to the unique disposition of the ducts in the central body of the thermostatic device, also the manifold intended to receive this device may be of very simplified construction in comparison with that usually needed.

On the contrary, in those cases in which the device according to the invention should operate as a thermostatic mixing faucet, a flow control means may be easily installed at the base of said central body, in order to act on the inlet ducts without influencing the central delivery duct. The central position of the delivery duct allows a considerably simple embodiment of said flow control means, whose presence ensures the separation between the inlet pipings for hot and cold water, when the faucet is closed, without the need for installing non-return valves.

In an embodiment, said flow control means comprises a pair of sleeves of elastomeric material pushed by springs, installed in the manifold to which the thermostatic faucet is applied and acting against the bottom surface of the central body of the thermostatic faucet. In another similar embodiment, such sleeves are installed in the central body of the thermostatic faucet and act against a surface of the manifold to which the faucet is applied.

In a further embodiment, said flow control means comprises a pair of hard material plates, installed the one in the central body of the device and the other in a supporting member connected to the manifold such as not to be allowed to rotate.

In all cases, the control of the faucet is effected by rotating the whole faucet with respect to the manifold on which it is mounted. Preferably, the external envelope of the faucet is provided with a control lever, or with knurls or grooves suitable for allowing operating its rotation.

These and other features, objects and advantages of the subject of the invention will appear more clearly from the following description of some exemplificative and not limitative embodiments, with reference to the appended drawings, wherein:
Fig. 1 shows in a diametrical cross section a thermostatic device according to the invention, not having the operation of a faucet, mounted on a supply and delivery manifold;
Fig. 2 shows in a diametrical cross section a thermostatic device according to the invention, having the operation of a faucet, mounted on a supply and delivery manifold;
Fig. 3 shows in a diametrical cross section another embodiment of a thermostatic device according to the invention, having the operation of a faucet, mounted on a supply and delivery manifold; and
Fig. 4 shows in a diametrical cross section a different embodiment of a thermostatic device not having the operation of a faucet, particularly suitable for a fixed installation.

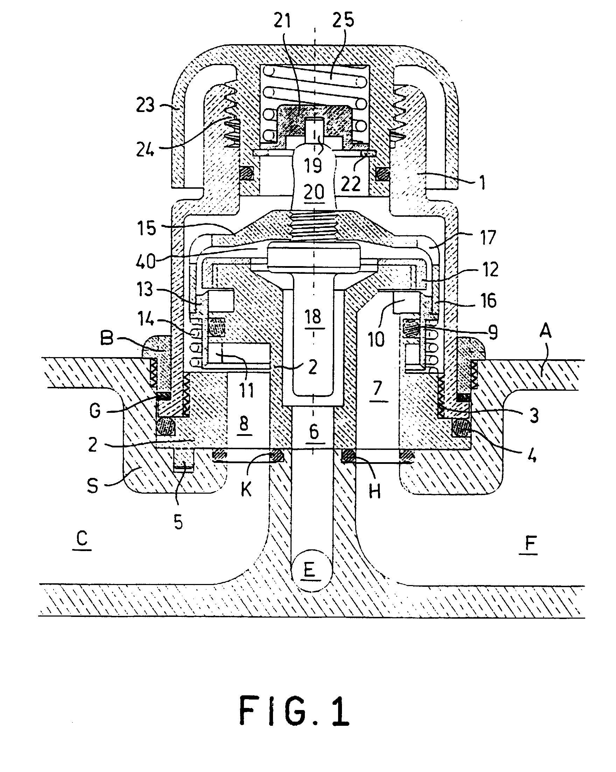

With reference at first to Figure 1, there is shown a thermostatic device according to the invention which is not intended to effect the operation of a faucet. It may be used, for example, in order to supply with water at a constant and adjustable temperature a number of hydraulic appliances. As it always happens in such kinds of devices, some non-return valves (not shown) should be provided in the supply pipings for hot and cold water, if a communication between them is to be avoided. The device is represented as mounted on a supply and delivery manifold A which comprises a piping F for supply of cold water, a piping C for supply of hot water and a piping E for delivery of mixed water at a regulated temperature.

The device according to the invention comprises an envelope 1 to which is fixedly connected, for example by means of a thread 3, a central body 2. A packing 4 seals between these two parts and also with respect to a seat S of manifold A, wherein the thermostatic device is mounted. In this case, a pin 5 (or any other reference means) acts between the central body 2 and the seat S of manifold A, in order to establish the fixed position of the thermostatic device. This latter is fixed by means of a threaded ring B screwed in the seat S of manifold A; a packing G, for example of a polyamidic resin, may be provided for preventing a fortuitous unscrewing.

The central body 2 comprises: a central delivery duct 6 intended to communicate with the delivery piping E of manifold A, an inlet duct for cold water 7 intended to communicate with the piping F of manifold A, through a seal packing H, and an inlet duct for hot water 8 intended to communicate with the piping C of manifold A, through a seal packing K. The inlet ducts 7 and 8 are located at the sides of the central delivery duct 6, for example, but not necessarily, diametrically opposite as in the represented embodiment. The delivery duct 6 extends by increasing its section up to the top end of the central body 2, and there it opens in a mixing chamber 40; on the contrary, the inlet ducts 7 and 8 open in two annular chambers 10 and 11, respectively, which are formed at the periphery of the central body 2 and are axially displaced the one with respect to the other; a packing 9 for separation is installed between said annular chambers. The bottom wall of the annular chamber 11 extends to form a closure shoulder. On the top end of the central body 2 is screwed a threaded ring 12, whose bottom rim forms a closure shoulder for the annular chamber 10. Between these two shoulders, contacting the separation packing 9, there is mounted a slide valve 13 having a return spring 14 which pushes the slide valve 13 towards the contact against the shoulder formed by the threaded ring 12.

In the direction opposite to that of spring 14, on the slide valve 13 may act a cup comprising a disk 15 and a skirt 16; this cup is provided, in this case in the region of transition from the disk 15 to the skirt 16, with some openings 17. To the disk 15 of this cup is fixed, for example screwed, a thermometric element 18 acting by thermal expansion, which extends within the delivery duct 6. In the embodiment shown, this thermometric element acting by thermal expansion is of the well known type usually named "pill", whose envelope contains a thermally expandable wax which, as a function of the temperature, pushes a moveable rod 19, which may be protected by a rubber cap 20. Rod 19 rests against a rest ring 21 kept by an elastic ring 22 within the cavity of a control handle 23 screwed at 24 on the top end of the envelope 1 of the thermostatic device. A security spring 25 normally pushes the rest ring 21 against the elastic ring 22; this security arrangement, per se well known, aims to allow a possible elastic yield under action of the thermal expansion of the thermometric element 18, in case of operation irregularities, in order to avoid damaging the device.

The operation of this device is as follows:

The cold water coming from piping F passes through the inlet duct 7 and arrives to the annular chamber 10. From there, through the small space existing between the slide valve 13 and the shoulder formed by the screw ring 12, the cold water passes between the screw ring 12 and the skirt 16, then between the screw ring 12 and the disk 15, arrives in the mixing chamber 40 and then it proceeds towards the delivery duct 6.

On its turn, the hot water coming from piping C passes through the inlet duct 8 and arrives to the annular chamber 11. From there, through the small space existing between the slide valve 13 and the bottom shoulder of the annular chamber 11, the hot water passes outside the skirt 16, then it traverses the openings 17 and proceeds, in the mixing chamber 40 formed between the screw ring 12 and the disk 15, towards the delivery duct 6.

At the openings 17, the hot water flow meets with the cold water flow, the directions of these two flows being almost perpendicular the one another. Therefore, in this region arises a considerable turbulence, which ensures a perfect mixing of both flows. Thus the water which proceeds in the mixing chamber 40 between the screw ring 12 and the disk 15 is well mixed. It arrives in the delivery duct 6 and, by passing therethrough, it laps the thermometric element 18, which therefore attains the same temperature of the mixed water. This latter then proceeds up to the delivery piping E of manifold A.

The thermometric element 18, which attains the same temperature of the mixed water, expands in corresponding manner and its moveable rod 19, by acting against the rest ring 21, lowers the cup 15-16 and the slide valve 13 against the action of the return spring 13. Due to this lowering, the passage between the slide valve 13 and the shoulder formed by the screw ring 13 is enlarged, whereas at the same time the passage between the slide valve 13 and the bottom shoulder of the annular chamber 11 is restricted; therefore the cold water flow increases, and the hot water flow decreases. Of course, the opposite phenomenon takes place when the slide valve 13, due to a contraction of the thermometric element 18, is displaced upwards. A condition of equilibrium is thus attained, which is then kept constant (within the limits of the sensitivity of the device), both if the inlet pressures of the hot water and/or the cold water are modified, and if the temperatures of these incoming waters are modified.

In a manner per se known, if for any reason an expansion of the thermometric element 18 cannot be followed by a corresponding displacement of the slide valve 13, the rest ring 21 pushed by the spring 25 yields under the pressure applied by the moveable rod 19 of the thermometric element, thus limiting to a security value the stresses present in the whole device.

As it may be understood by observing Figure 1, between the operative diameter of the slide valve 13 and the inner diameter of the envelope 1 need to be provided only: a small space between the screw ring 12 and the skirt 16, for the passage of the cold water flow; a space corresponding to the small thickness of the skirt 16; and a small space between the skirt 16 and the envelope 1 for the passage of the hot water flow. Therefore, being equal the diameter of the envelope 1, the useful operative diameter of the slide valve 13 may be very larger than that provided in the known devices, wherein between the slide valve and the envelope of the device are installed the inlet ducts both for the cold water and for the hot water. As a consequence, being equal the encumbrance, a thermostatic device according to the invention may have a larger delivery rate and/or a larger sensitivity with respect to the known devices.

It may also be understood by observing Figure 1 that the construction of the central body 2 is very simple and therefore easy and cheap to manufacture, in comparison with the present structures used for leading the hot and cold water from outside to the passages controlled by the slide valve operated by the thermometric element. In fact, the central body of a thermostatic device according to the invention may even be manufactured in economical manner by casting, pressure casting or injection.

It may further be understood from the above description that it is sufficient to more or less screw the ring 12 on the threaded top end of the central body 2 in order to modify the distance between the shoulder formed by the screw ring 12 and the bottom shoulder of the annular chamber 11, and therefore the length on which may be displaced the slide valve 13 between its two extreme positions, of interception of the cold water and of interception of the hot water, respectively. Therefore it is thus allowed a possibility of adjusting the maximum delivery rate of an individual device, by inversely modifying its sensitivity, or vice-versa, and therefore of adapting in the best manner the device in view of particular installation needs. It should be remarked, however, that such a possibility of adjustment is not always required, and therefore it may be omitted when not necessary.

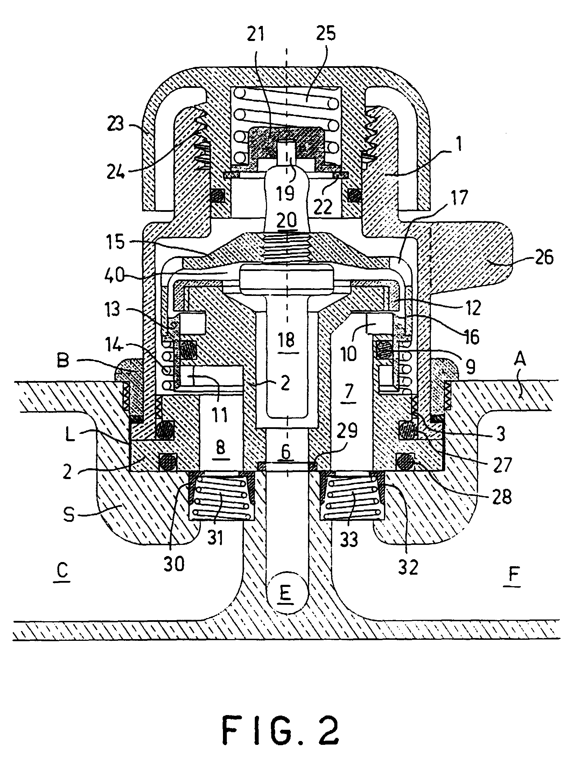

It will now be described, with reference to Figure 2, how a thermostatic device according to the invention may very easily be embodied as a thermostatic mixing faucet free from non-return valves. Most of the components of the faucet according to Figure 2 are identical to the corresponding components according to Figure 1, and they will not be further described and are designated by the same reference numbers. The description of the structure and operation will concern the differences only.

In this case, the envelope 1 of the faucet (to which the central body 2 is solid) is mounted rotatably in the seat 5 of manifold A. To this aim, the reference means 5 is missing, and the packing G is replaced by an antifriction bushing L. Moreover, the envelope 1 is provided with a control lever 26, which is shown as integral but could be in any manner connected, and may be replaced by any other means, such as knurls or grooves in the envelope 1, capable of allowing the user to rotate the same. As a modification of construction (which could be used in the device according to Figure 1 too), the seal packing 4 acting between the envelope 1, the central body 2 and the seat S of manifold A, is replaced by a pair of packings: 27 acting between the envelope 1 and the central body 2, and 28 acting between the central body 2 and the seat S of manifold A. Moreover there is foreseen a packing 29 which seals between the delivery duct 6 of the thermostatic faucet and the delivery piping E of manifold A.

In the seat S of manifold A are installed, registering (for a certain angular position of the central body 2) with the inlet ducts 7 and 8, two sleeves 30 and 32 of an elastomeric material, pushed by springs 31 and 33, respectively.

When the envelope 1 and the central body 2 are in the shown position, wherein the inlet ducts 7 and 8 are in register with the sleeves 30 and 32, respectively, the faucet according to Figure 2 behaves in the same manner as the thermostatic device according to Figure 1, and it delivers the maximum possible delivery rate. if, starting from this position, the envelope 1 and the central body 2, which are mutually solid, are rotated by a certain angle, the free passage section for the flows coming from the sleeves 30 and 32 is reduced, whereby the delivery rate is reduced correspondingly. If, proceeding the rotation of envelope 1, the ducts 7 and 8 are brought to a position in which they do no more register with the sleeves 30 and 32, the flow is completely intercepted. In this condition, moreover, there is no communication between the supply pipings C and F of manifold A. For this reason there is no need for installing non-return valves.

Of course, instead of the sleeves 30 and 32 pushed by the springs 31 and 33, other seal means could be used, such as sleeves pushed by their own resilience, or other kinds of packings. Moreover, the openings of ducts 7 and 8 on the bottom face of the central body 2 could be shaped in some suitable manner, in order to render more gradual the modification of the delivery rate as a function of the rotation angle of envelope 1.

It is to be understood, finally, that the seal members 30 and 32, which have been shown installed in the seat S of manifold A and cooperating with the plane bottom face of the central body 2, could on the contrary be installed in seats of the central body 2 and cooperate with a plane face offered (as in the case of Figure 1) by the bottom of the seat S of manifold A.

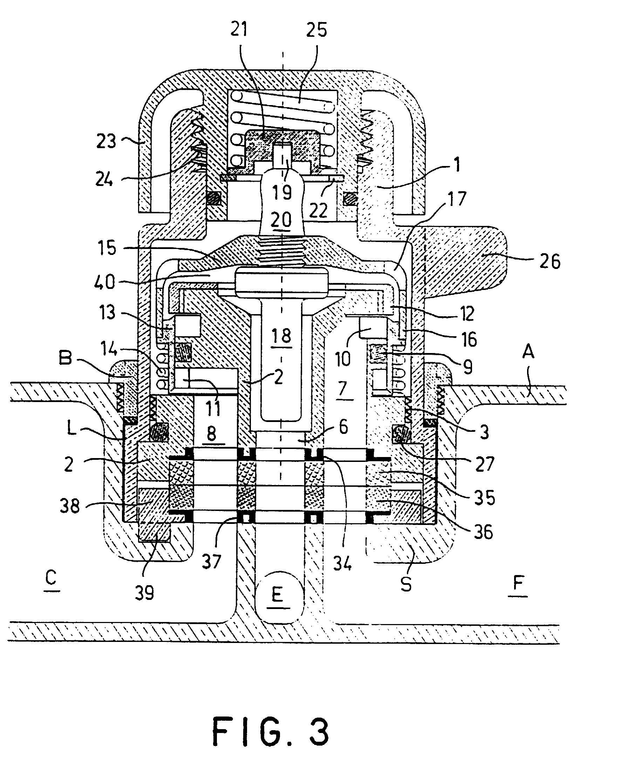

Figure £ shows how the operation of the thermostatic faucet of the invention for controlling the delivery rate and the closure could be entrusted, by simple means, to a pair of plates of hard material. Most of the components of the faucet according to Figure 3 are identical to the corresponding components according to Figures 1 and 2, and they will not be further described and are designated by the same reference numbers. The description of the structure and operation will concern the differences only.

In this case, in the bottom face of the central body 2 is seated, by using a suitably shaped packing 34, a top plate 35 of hard material, provided with openings registering with the ducts 5, 7 and 8, whereas a bottom plate 36 of hard material, provided with similar openings, is seated, by using a suitably shaped packing 37, in a supporting ring 38. The supporting ring 38 is rotatably mounted in the bottom end of envelope 1, which in this case extends beyond the bottom face of the central body 2. A reference means 39, such as a protruding pin, acts between the seat S of manifold A and the supporting ring 38, in order to keep this latter in a fixed position when the envelope 1 is rotated. Retaining means (not shown) per se known may be provided between the supporting ring 38 and the envelope 1, in order to ensure that these parts are solid in axial direction, but without hindering their mutual rotation.

Thanks to the described features, the bottom plate 36 of hard material remains always fixed with respect to the manifold A, whereas the top plate 35 rotates when the envelope 1 is rotated along with the central body 2. Therefore the superposition between the passage openings of the two plates 35 and 35 is modified, thus correspondingly modifying the delivery rate. In this case too, when the complete interception of the flow is attained, there is no communication between the supply pipings C and F, and therefore there is no need for non-return valves. In this case too, the passage openings of the plates 35 and 36 of hard material may be shaped in a suitable manner in order to render more gradual the reduction of the delivery rate as a function of the rotation of the envelope 1 and the central body 2 solid thereto.

Both in the case of Figure 2 and in the case of Figure 3, the passage sections offered to the hot water and the cold water during the regulation of the delivery rate vary in proportional manner, and therefore the operation of the thermostatic device contained in the faucet is not disturbed, but in any event this operation compensates for any loss of proportionality which could take place in the relative change of the delivery rates of hot and cold water.

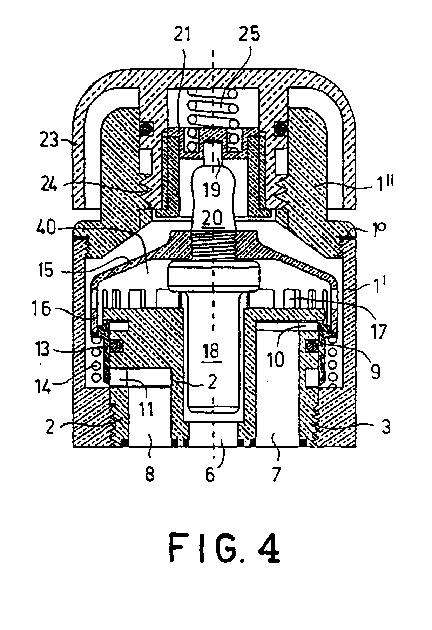

It will finally be described, with reference to Fifgure 4, an embodiment, different from that of Figure 1, of a thermostatic device non operating as a faucet, which therefore is particularly suitable for a fixed installation. Most of the components of the faucet according to Figure 4, although having a different constructive shape, are identical in operation to the corresponding components according to Figure 1; these components will not be further described and are designated by the same reference numbers used in Figure 1. The description of the structure and operation will concern the differences only.

In this case the envelope of the thermostatic device is formed by two parts 1' and 1" mutually connected, for example by screwing, with interposition of a packing 1°. The security device 21-25 for the thermometric element 18-19 has the same operation, although differently shaped. In this case, the disk portion 15 of the cup 15-16 has the shape of a truncated cone, and the passage openings 17 are embodied in the form of a number of windows in the skirt portion 16. In this case the screw ring 12 is missing, and the shoulder intended to co-operate with the slide valve 13 in register with the annular chamber 10 is directly offered by the protruding top wall of the annular chamber 10 itself. On its turn, the shoulder intended to co-operate with the slide valve 13 in register with the annular chamber 11 is offered by the bottom part 1' of the envelope of the thermostatic device. The possibility of adjustment offered, according to Figure 1, by the screw ring 12 is missing in this case, or even it may be attained by more or less screwing the whole central body 2 within the bottom part 1' of the envelope of the device. As it may be understood, there is no difference in the operation of this embodiment with respect to the embodiment shown in Figure 1.

It should be understood that the invention is not limited to the embodiments described and shown as examples. Different modifications are within the skill of the designer: for example, the sleeves of elastomeric material pushed by springs may be replaced by sleeves pushed by their own resilience or by the water pressure. These and other changes, and any replacement by technically equivalent means, may be realized within the scope of the Claims.

## Claims

1. A thermostatic mixing device comprising two inlet ducts (7,8) for hot water and cold water, a mixing chamber (40), passages between said inlet ducts (7,8) and said mixing chamber (40), a delivery duct (6) for mixed water, a thermometric element (18) acting by thermal expansion arranged for being lapped by the mixed water, and a distribution slide valve (13) operated by said thermometric element (18) acting by thermal expansion and arranged for throttling in opposite manner said passages between the two inlet ducts (7,8) and the mixing chamber (40), in order to maintain substantially constant the temperature of the mixed water, characterized in that both the inlet ducts (7,8) for hot and cold water, and the delivery duct (6) for the mixed water, are embodied in a central body (2) situated inside the slide valve (13) operated by the thermometric element (18).

2. A thermostatic device according to Claim 1. characterized in that said delivery duct (6) is located in center and it contains the thermometric element (18), and the two inlet ducts (7,8) are located at the sides of the delivery duct (6) and each of them opens in an own annular chamber (10,11), both these annular chambers being realized at the periphery of the central body (2), being displaced the one with respect to the other along the axis of the device, being separated by a sealing packing (9) and being limited by shoulders with which co-operates the slide valve (13) in order to effect the regulation.

3. A thermostatic device according to Claim 2, characterized in that said shoulder of one of the two annular chambers is formed on a ring nut (12) screwed on the distal end of said central body (2), whereby the position of the shoulder may be regulated within certain limits by more or less screwing said ring nut (12), thus obtaining an individual regulation of the delivery rate and sensitivity of the device.

4. A thermostatic device according to Claim 1, characterized in that the thermometric element (18) acting by thermal expansion is fixed to a cup ((15-16) comprising a disk (15) and a skirt (16) extending outside the slide valve (13), said cup (15-16) being connected to said slide valve (13) in order to operate the same.

5. A thermostatic device according to Claim 4, characterized in that water passages (17) are formed in said cup (15-16) in order to allow mixing a water flow coming from outside and a water flow coming from inside, said mixing operation taking place in effective way between almost perpendicular flows, before the mixed water comes to contact the thermometric element (18).

6. A thermostatic device according to Claim 1, not being required to have the operation of a faucet, characterized in that it is arranged for being applied in a fixed position onto a supply and delivery manifold (A).

7. A thermostatic device according to Claim 1, intended to operate as a thermostatic mixing faucet, characterized in that a flow control means (30-32; 34-37) is installed at the base of said central body (2), in order to act on the inlet ducts (7,8) without influencing the central delivery duct (6).

8. A thermostatic device according to Claim 7, characterized in that said flow control means comprises a pair of sleeves (30,32) of elastomeric material pushed by springs (31,33), by their own resilience or by the water pressure.

9. A thermostatic device according to Claim 8, characterized in that said sleeves (30,32) are installed in the manifold (A) to which the thermostatic faucet is applied and act against the bottom surface of the central body (2) of the thermostatic faucet.

10. A thermostatic device according to Claim 8, characterized in that said sleeves are installed in the central body (2) of the thermostatic faucet and act against a surface of the manifold (A) to which the faucet is applied.

11. A thermostatic device according to Claim 7, characterized in that said flow control means comprises a pair of hard material plates (35,36), installed the one in the central body (2) of the device and the other in a supporting member (38) connected to the manifold (A) such as not to be allowed to rotate.

12. A thermostatic device according to Claim 11, characterized in that said supporting member (38) for a plate (35) of hard material is mounted within the envelope (1) of the thermostatic device in such a way as to be allowed to rotate with respect to the envelope (1) but not to axially separate therefrom.

13. A thermostatic device according to Claim 7, characterized in that, the control of the faucet being effected by rotating the whole faucet (1) with respect to the manifold (A) on which it is mounted, the external envelope (1) of the faucet is provided with a control lever (26), possibly forming a separate component connected to the envelope (1), or with knurls or grooves suitable for allowing operating its rotation.

14. A thermostatic device according to Claim 1, characterized in that said central body (2), wherein are formed the ducts (6-8), is manufactured by casting, pressure casting or injection.

## Patentansprüche

1. Thermostatische Mischvorrichtung mit zwei Zulaufleitungen (7,8) für Warm- und Kaltwasser, einer Mischkammer (40), Durchlässen zwischen den Zulaufleitungen (7,8) und der Mischkammer (40), einer Auslaufleitung (6) für das gemischte Wasser, einem nach dem Wärmeausdehnungsprinzip arbeitenden Temperaturmesselement (18), das so angeordnet ist, dass es vom gemischten Wasser bespült wird, und mit einem durch das nach dem Wärmeausdehnungsprinzip arbeitende Temperaturmesselement (18) betätigten Schieber (13), der so angeordnet ist, dass die Durchlässe zwischen den beiden Zulaufleitungen (7,8) und der Mischkammer (40) in unmgekehrten Richtungen gedrosselt werden, um die Temperatur des gemischten Wassers im wesentlichen gleichbleibend zu halten, dadurch gekennzeichnet, dass sowohl die Zulaufleitungen (7,8) fur Warm- und Kaltwasser, als auch die Auslaufleitung (6) für das gemischte Wasser in einem Mittelkörper (2) ausgebildet sind, der im Inneren des durch das Temperaturmesselement (18) betätigten Schiebers (13) angeordnet ist.

2. Thermostatische Mischvorrichtung nach Anspruch 1, dadurch gekennzeichnet, dass die Auslaufleitung (6) mittig angeordnet ist und das Temperaturmesselement (18) enthält, während die beiden Zulaufleitungen (7,8) an den Seiten der Auslaufleitung (6) angeordnet sind und je in eine eigene Ringkammer (10,11) münden und dass die beiden Ringkammern am Umfang des Mittelkörpers (2) ausgebildet und so angeordnet sind, dass sie entlang der Achse der Mischvorrichtung gegeneinander versetzt, durch eine Trenndichtung (9) getrennt und durch Ansätze begrenzt sind, mit denen der Schieber (13) zusammenwirkt, um die Regelung vorzunehmen.

3. Thermostatische Mischvorrichtung nach Anspruch 2, dadurch gekennzeichnet, dass der Ansatz der einen der beiden Ringkammern an einer Nutmutter (12) angeformt ist, die am äussersten Ende des Mittelkörpers (2) angeschraubt ist, so dass die Lage des Ansatzes innerhalb gewisser Grenzen dadurch eingestellt werden kann, dass die Nutmutter (12) mehr oder weniger angezogen wird, um den Durchfluss und die Empfindlichkeit der Mischvorrichtung eigenartig zu regeln.

4. Thermostatische Mischvorrichtung nach Anspruch 1, dadurch gekennzeichnet, dass das nach dem Wärmeausdehnungsprinzip arbeitende Temperaturmesselement (18) an einem Napf (15-16) befestigt ist, der eine Scheibe (15) und einen sich ausserhalb des Schiebers (13) erstreckenden Mantel (16) aufweist, und dass der Napf (15-16) mit dem Schieber (13) für dessen Betätigung verbunden ist.

5. Thermostatische Mischvorrichtung nach Anspruch 4, dadurch gekennzeichnet, dass im Napf (15-16) Durchlässe (17) für das Wasser ausgebildet sind, um die Mischung eines von aussen her laufenden Wasserstroms mit einem von innen her laufenden Wasserstrom zu ermöglichen, wobei dieser Mischvorgang zwischen etwa rechtwinklig verlaufenden Wasserströmen wirksam erfolgt, bevor das gemischte Wasser mit dem Temperaturmesselement (18) in Berührung kommt.

6. Thermostatische Mischvorrichtung nach Anspruch 1, die an sich nicht die Funktion eines Hahnes erfüllen soll, dadurch gekennzeichnet, dass sie dazu ausgelegt ist, um an einem Sammelrohr (A) zur Zufuhr und zur Abgabe von Wasser in fester Lage angebracht zu werden.

7. Thermostatische Mischvorrichtung nach Anspruch 1, die die Funktion eines thermostatischen Mischhahnes erfüllen soll, dadurch gekennzeichnet, dass an der Unterlage des Mittelkörpers (2) ein Mittel (30-32; 34-37) zur Kontrolle des Wasserstroms vorgesehen ist, um die Zulaufleitungen (7,8) zu steuern, ohne die mittlere Auslaufleitung (6) zu beeinflussen.

8. Thermostatische Mischvorrichtung nach Anspruch 7, dadurch gekennzeichnet, dass das Mittel zur Kontrolle des Wasserstroms ein Paar Hülsen (30,32) aus einem Elastomer besteht, die durch Federn (31,33), durch die eigene Elastizität oder durch den Wasserdruck beaufschlagt werden.

9. Thermostatische Mischvorrichtung nach Anspruch 8, dadurch gekennzeichnet, dass die Hülsen (30,32) im Sammelrohr (A) eingebaut sind, an dem der thermostatische Hahn angebracht wird, und auf die untere Fläche des Mittelkörpers (2) des thermostatischen Hahnes wirken.

10. Thermostatische Mischvorrichtung nach Anspruch 8, dadurch gekennzeichnet, dass die Hülsen im Mittelkörper (2) des thermostatischen Hahnes eingebaut sind und auf die Fläche des Sammelrohres (A) wirken, an der der thermostatische Hahn angebracht wird.

11. Thermostatische Mischvorrichtung nach Anspruch 7, dadurch gekennzeichnet, dass das Mittel zur Kontrolle des Wasserstroms ein Paar Platten (35,36) aus hartem Werkstoff aufweist, von denen die eine im Mittelkörper (2) der Mischvorrichtung und die andere in einer verdrehsicher mit dem Sammelrohr (A) verbundenen Halterung (38) eingebaut ist.

12. Thermostatische Mischvorrichtung nach Anspruch 11, dadurch gekennzeichnet, dass die Halterung (38) für eine Platte (35) aus hartem Werkstoff im Gehäuse (1) der thermostatischen Mischvorrichtung so angeordnet ist, dass sie gegenüber dem Gehäuse (1) drehen, sich jedoch axial nicht loslösen kann.

13. Thermostatische Mischvorrichtung nach Anspruch 7, dadurch gekennzeichnet, dass zur Betätitung des Hahnes der ganze Hahn (1) gegenüber dem Sammelrohr (A), an dem er angebracht ist, gedreht wird und das Aussengehäuse (1) des Hahnes einen Betätigungshebel (26), der eventuell ein getrennter, mit dem Gehäuse (1) verbundener Bestandteil ist, oder aber Rillen oder Nuten aufweist, durch die es in Drehbewegung versetzt werden kann.

14. Thermostatische Mischvorrichtung nach Anspruch 1, dadurch gekennzeichnet, dass der Mittelkörper (2), in dem die Leitungen (6-8) ausgebildet sind, im Giess-, im Druckguss- oder im Spritzgiessverfahren hergestellt ist.

## Revendications

1. Dispositif mélangeur thermostatique comprenant deux canalisations d'alimentation (7,8) pour eau chaude et froide, une chambre de mélange (40), des passages entre lesdites canalisations d'alimentation (7,8) et ladite chambre de mélange (40), une canalisation de débit (6) pour l'eau mélangée, un élément thermométrique (18) agissant par dilatation thermique, disposé pour être léché par l'eau mélangée, et un tiroir de distribution (13) actionné par ledit élément thermométrique (18) agissant par dilatation thermique, et disposé pour étrangler de façon opposée lesdits passages entre les deux canalisations d'alimentation (7,8) et la chambre de mélange (40), dans le but de maintenir substantiellement constante la température de l'eau mélangée, caractérisé en ce que soit les canalisations d'alimentation (7,8) pour l'eau chaude et pour l'eau froide, soit la canalisation de débit (6) pour l'eau mélangée, sont réalisées dans un corps central (2) disposé à l'intérieur du tiroir (13) actionné par l'élément thermométrique (18).

2. Dispositif thermostatique suivant la revendication 1, caractérisé en ce que ladite canalisation de débit (6) est disposée dans le centre et elle contient l'élément thermométrique (18), et les deux canalisations d'alimentation (7,8) sont disposées des côtés de la canalisation de débit (6), et chacune d'elles se termine en une chambre annulaire (10,11), ces deux chambres annulaires étant réalisées à la périphérie du corps central (2), étant déplacées l'une par rapport à l'autre le long de l'axe du dispositif, étant séparées par une garniture d'étanchéité (9) et étant limitées par des épaulements qui coopèrent avec le tiroir (13) pour effectuer le réglage.

3. Dispositif thermostatique suivant la revendication 2, caractérisé en ce que ledit épaulement de l'une des deux chambres annulaires est réalisé sur un anneau fileté (12) vissé sur l'extrémité distale dudit corps central (2), de sorte que la position de l'épaulement peut être réglée dans certaines limites en vissant plus ou moins ledit anneau fileté (12), obtenant ainsi un réglage individuel du débit et de la sensibilité du dispositif.

4. Dispositif thermostatique suivant la revendication 1, caractérisé en ce que l'élément thermométrique (18) agissant par dilatation thermique est fixé à une coupe (15-16) comprenant un disque (15) et une jupe (16) s'étendant à l'extérieur du tiroir (13), ladite coupe (15-16) étant connectée audit tiroir (13) pour l'actionner.

5. Dispositif thermostatique suivant la revendication 4, caractérisé en ce que des passages (17) pour l'eau sont pratiqués dans ladite coupe (15-16) pour permettre le mélange d'un flux d'eau venant de l'extérieur et d'un flux d'eau venant de l'intérieur, ladite opération de mélange ayant lieu d'une façon efficace entre des flux substantiellement perpendiculaires, avant que l'eau arrive au contact avec l'élément thermométrique (18).

6. Dispositif thermostatique suivant la revendication 1, non destiné à fonctionner comme robinet, caractérisé en ce qu'il est prédisposé pour être appliqué en position fixe sur un collecteur d'alimentation et de débit (A).

7. Dispositif thermostatique suivant la revendication 1, destiné à fonctionner comme robinet mélangeur thermostatique, caractérisé en ce qu'un moyen de contrôle du flux (30-32; 34-37) est installé à la base dudit corps central (2), pour agir sur les canalisations d'alimentation (7,8) sans influencer la canalisation centrale de débit (6).

8. Dispositif thermostatique suivant la revendication 7, caractérisé en ce que ledit moyen de contrôle du flux comprend un couple de manchons (30,32) de matériau élastomérique, poussés par des ressorts (31, 33), par leur propre élasticité ou par la pression de l'eau.

9. Dispositif thermostatique suivant la revendication 8, caractérisé en ce que lesdits manchons (30,32) sont installés dans le collecteur (A) auquel le robinet thermostatique est appliqué, et agissent contre la surface inférieure du corps central (2) du robinet thermostatique.

10. Dispositif thermostatique suivant la revendication 8, caractérisé en ce que lesdits manchons sont installés dans le corps central (2) du robinet thermostatique et agissent contre une surface du collecteur (A) auquel le robinet est appliqué.

11. Dispositif thermostatique suivant la revendication 7, caractérisé en ce que lesdits moyens de contrôle du flux comportent un couple de plaques de matériau dur (35,36), installées l'une dans le corps central (2) du dispositif et l'autre dans un organe de support (38) connecté au collecteur (A) de sorte à ne pas pouvoir tourner.

12. Dispositif thermostatique suivant la revendication 11, caractérisé en ce que ledit organe de support (38) pour une plaque (35) de matériau dur est monté dans l'enveloppe (1) du dispositif thermostatique de sorte à pouvoir tourner par rapport à l'enveloppe (1) mais à ne pas pouvoir se séparer axialement de lui.

13. Dispositif thermostatique suivant la revendication 7, caractérisé en ce que, le contrôle du robinet étant effectué par rotation du robinet (1) tout entier par rapport au collecteur (A) sur lequel il est monté, l'enveloppe externe (1) du robinet est pourvue d'un levier de commande (26), éventuellement constituant un composant séparé connecté à l'enveloppe (1), ou bien de nervures ou rainures appropriées pour permettre d'en commander la rotation.

14. Dispositif thermostatique suivant la revendication 1, caractérisé en ce que ledit corps central (2), dans lequel sont pratiquées les canalisations (6-8), est fabriqué par fusion, par fusion sous pression ou par injection.
